# EUROPÄISCHE PATENTANMELDUNG

(11) **EP 3 327 414 A1**
(43) Veröffentlichungstag der Anmeldung: **30.05.2018**
(21) Anmeldenummer: 16201168.8
(22) Anmeldetag: 29.11.2016
(51) Int. Cl.: G01K 1/14

(54) **SENSORVORRICHTUNG ZUR INSTALLATION IN EINER BOHRUNG**

(71) Anmelder: Siemens Aktiengesellschaft, 80333 München (DE)
(72) Erfinder: Höhl, Gernot, 95490 Mistelgau (DE); Pfannschmidt, Bernd, 90574 Rosstal (DE); Schmidt, Valerias, 90471 Nürnberg (DE); Stärz, Tobias, 91257 Pegnitz (DE)

(57) **Zusammenfassung**

Die Erfindung betrifft eine Sensorvorrichtung (2) zur Installation in einer Bohrung (4) einer elektrischen rotierenden Maschine (6), aufweisend einen Sensor (8), welcher mit mindestens einer Anschlussleitung (10) verbunden ist. Um die Sensorvorrichtung (2) flexibel zu positionierbar und universell verwendbar auszuführen, wird vorgeschlagen, dass die mindestens eine Anschlussleitung (1) zumindest teilweise von einem Schutzschlauch (12) umgeben ist, wobei der Schutzschlauch (12) zum Positionieren des Sensors (8) in der Bohrung (4) in eine Längsrichtung (L) beweglich in einem Schutzrohr (14) angebracht ist.

## Beschreibung

Die Erfindung betrifft eine Sensorvorrichtung zur Installation in einer Bohrung einer elektrischen rotierenden Maschine mit einem Sensor, der mit mindestens einer Anschlussleitung verbunden ist.

Darüber hinaus betrifft die Erfindung eine elektrische rotierende Maschine mit mindestens einer Bohrung und mindestens einer derartigen Sensorvorrichtung.

Der Betrieb einer elektrischen rotierenden Maschine wird mit einer Vielzahl an verschiedenen Sensoren, beispielsweise Temperatursensoren, Magnetfeldsensoren, Schwingungssensoren usw., überwacht. Eine derartige elektrische rotierende Maschine ist beispielsweise ein Motor oder ein Generator. Die Sensoren befinden sich zu einem Großteil innerhalb der elektrischen rotierenden Maschine, um die Messdaten präzise zu erfassen. Häufig werden die verschiedenen Sensoren in eine Bohrung der elektrischen rotierenden Maschine eingeführt und, je nach Sensortyp, Position innerhalb der Maschine und Tiefe der Bohrung, auf unterschiedliche Weise kontaktiert. Bei jeder neuen Anwendung muss ein neuer Sensorkopf hergestellt werden. Dies führt zu einer enormen Vielfallt an Sensorköpfen und großen Lagerbeständen und ist daher zeit- und kostenintensiv.

Die Patentschrift DE 21 53 482 C2 beschreibt eine Armatur zur elektrischen Temperaturmessung an einem Lager einer elektrischen Maschine oder dergleichen, die ein stabförmiges Gehäuse, einen in diesem Gehäuse angeordneten elektrischen Messfühler, einen das Gehäuse abschließenden Gehäusekopf und einem am Gehäusekopf angeordneten, zur Einführung eines Anschlusskabels dienenden, Anschlussstutzen besteht.

Die Offenlegungsschrift EP 0 993 099 A1 beschreibt eine Ständerwicklungstemperaturüberwachungseinrichtung, wobei zur Überwachung der Wicklungstemperatur einer elektrischen Maschine wenigstens eine Aufnahme vorgesehen ist, die an einer Wicklung in einer wärmeleitenden Verbindung angebracht ist. In die Aufnahme ist ein Temperatursensor auswechselbar einsetzbar.

Die Offenlegungsschrift DE 42 17 389 A1 beschreibt einen Temperaturmesseinsatz aus einem Temperatursensor, Innenleitungen und einem Anschlusselement. Der Temperatursensor ist direkt mit Innenleitern verbunden, wobei der Temperatursensor und ein Teil der Innenleiter in einem unteren Rohrteil angeordnet sind. Die Innenleiter sind einzeln isoliert und flexibel. Das untere Rohrteil besitzt am unteren Ende eine Wärmekontaktfläche und ist an seinem oberen Ende mit den Innenleitern vorzugsweise mittels einer Quetschverbindung verbunden. Das Anschlusselement ist mit einem oberen Rohr verbunden, wobei das obere Rohr mit einer Quetschverbindung die Innenleiter befestigt. Zwischen dem oberen Rohr und dem unteren Rohrteil ist eine Feder angeordnet, in deren Inneren die Innenleiter geführt werden.

Der Erfindung liegt die Aufgabe zugrunde, eine Sensorvorrichtung zur Installation in einer Bohrung einer elektrischen rotierenden Maschine anzugeben, die flexibel positionierbar und universell verwendbar ist.

Diese Aufgabe wird erfindungsgemäß durch eine Sensorvorrichtung zur Installation in einer Bohrung einer elektrischen rotierenden Maschine gelöst, die einen Sensor aufweist, welcher mit mindestens einer Anschlussleitung verbunden ist, wobei die mindestens eine Anschlussleitung zumindest teilweise von einem Schutzschlauch umgeben ist, wobei der Schutzschlauch zum Positionieren des Sensors in der Bohrung in eine Längsrichtung beweglich in einem Schutzrohr angebracht ist. Darüber hinaus wird die Aufgabe erfindungsgemäß durch eine elektrische rotierende Maschine mit mindestens einer Bohrung und mindestens einer derartigen Sensorvorrichtung gelöst, wobei der mindestens eine Sensor mit einem zugehörigen Schutzschlauch in die mindestens eine Bohrung eingeführt ist.

Die in Bezug auf die Sensorvorrichtung nachstehend angeführten Vorteile und bevorzugten Ausgestaltungen lassen sich sinngemäß auf die elektrische rotierende Maschine übertragen.

Der Erfindung liegt die Überlegung zugrunde, eine Sensorvorrichtung anzugeben, welche bezüglich der Anforderungen an eine Einbausituation in einer elektrischen rotierenden Maschine flexibel ist. Insbesondere soll der Sensor der Sensorvorrichtung mit einem geringen Aufwand in unterschiedlich tiefen Bohrungen mit unterschiedlichem Durchmesser positionierbar sein. Der Schutzschlauch, der die mindestens eine Anschlussleitung des Sensors zumindest teilweise umgibt, ist in Längsrichtung beweglich im Schutzrohr, welches beispielsweise im Bereich eines Randes der Bohrung an der elektrischen rotierenden Maschine fixiert ist, angeordnet. Durch eine Verschiebung des Schutzschlauchs im Schutzrohr ist der Sensor in unterschiedlich tiefen Bohrungen flexibel positionierbar. Es ist nicht erforderlich, Anpassungen an der Sensorvorrichtung, beispielsweise durch Kürzen oder Verlängern von Komponenten, durchzuführen, sodass die Sensorvorrichtung für eine Vielzahl von Einbausituation universell verwendbar ist.

Bei einer bevorzugten Ausführungsform ist der Schutzschlauch mit dem Schutzrohr über mindestens eine innere Dichtung, insbesondere eine O-Ring-Dichtung, diffusionsdicht verbunden. Eine O-Ring-Dichtung, die auch O-Ring genannt wird, ist ein ringförmiges Dichtungselement, das einen runden, insbesondere o-förmigen, Ringquerschnitt aufweist und insbesondere aus einem begrenzt elastischen Material, beispielsweise aus einem Kautschuk, insbesondere Perfluorkautschuk, aus Polyethylen, aus Polytetrafluorethylen oder einem anderen Kunststoff, hergestellt ist. Durch eine derartige Dichtung wird auf einfache Weise verhindert, dass elektronische Bauteile beschädigt und/oder Messungen verfälscht werden.

Bei einer weiteren vorteilhaften Ausgestaltung weist die Sensorvorrichtung eine Befestigungsvorrichtung auf, über die das Schutzrohr mit der elektrischen rotierenden Maschine mechanisch verbindbar ist. Die Befestigungsvorrichtung wird insbesondere aus einem Metall oder aus einem Kunststoff, beispielsweise aus Hart-PVC, hergestellt. Insbesondere ist das Schutzrohr im Bereich eines Randes der Bohrung mit der elektrischen rotierenden Maschine mechanisch verbindbar. Beispielsweise ist die Befestigungsvorrichtung formschlüssig mit dem Schutzrohr verbunden und wird im Bereich des Randes der Bohrung mit der elektrischen rotierenden Maschine verschraubt. Durch die Befestigungsvorrichtung ist eine zuverlässige und einfache lösbare Verbindung des Schutzrohrs mit der elektrischen rotierenden Maschine gewährleistet, ohne eine bauliche Veränderung am Schutzrohr selbst vorzunehmen.

Vorteilhaft weist die Sensorvorrichtung mindestens eine äußere Dichtung, insbesondere eine O-Ring-Dichtung, auf, die dafür vorgesehen ist, die Bohrung abzudichten. Durch eine derartige Dichtung wird verhindert, dass beispielsweise Wärmeleitpaste aus der Bohrung in die Maschine gelangt und dass Schadstoffe, beispielsweise Staub, von der Maschine in die Bohrung gelangen.

Bei einer bevorzugten Ausführungsform ist die äußere Dichtung mit dem Schutzrohr und der Befestigungsvorrichtung zur Abdichtung der Bohrung verbunden. Insbesondere wird das Schutzrohr durch die Befestigungsvorrichtung und den Rand der Bohrung verklemmt. Durch die Verklemmung des Schutzrohrs über die äußere Dichtung wird die Bohrung abgedichtet und das Schutzrohr lösbar fixiert.

Bei einer weiteren vorteilhaften Ausgestaltung ist die Befestigungsvorrichtung als Anschlussflansch ausgeführt, der mit dem Schutzrohr verbunden ist und über den das Schutzrohr mit der elektrischen rotierenden Maschine mechanisch verbindbar ist. Insbesondere sind die als Anschlussflansch ausgeführte Befestigungsvorrichtung und das Schutzrohr stoffschlüssig miteinander verbunden oder einstückig ausgeführt. Beispielsweise wird der Anschlussflansch im Bereich des Randes der Bohrung mit der elektrischen rotierenden Maschine verschraubt, sodass die Bohrung einfach und zuverlässig abgedichtet wird.

Auf besonders vorteilhafte Weise ist die Sensorvorrichtung im Bereich des Schutzrohres zumindest teilweise flexibel ausgeführt. Insbesondere im Bereich des Randes der Bohrung ist die Sensorvorrichtung flexibel ausgestaltet, sodass eine variable Kabelführung außerhalb der Bohrung gewährleistet ist.

Bei einer bevorzugten Ausführungsform ist das Schutzrohr als Wellrohr ausgeführt. Ein Wellrohr, das auch Balg genannt wird, ist ein Rohr, das insbesondere aus einem starren Material, beispielsweise aus einem Metall oder einem Kunststoff, hergestellt wird und, zumindest teilweise, einen wellenförmig wechselnden Durchmesser aufweist. Das Wellrohr ist im Bereich der Wellung, beispielsweise für eine variable Kabelführung, flexibel.

Bei einer weiteren vorteilhaften Ausgestaltung ist der Sensor zumindest teilweise von Wärmeleitpaste umgeben. Durch die Wärmeleitpaste wird bei verschiedenen Bohrungsdurchmessern eine thermische Kontaktierung des Sensors mit der Umgebung innerhalb der Bohrung gewährleistet. Die Wärmeleitpaste ermöglicht beispielsweise eine genaue und zuverlässige Temperaturmessung mit einem Temperatursensor und sorgt durch die thermische Anbindung des Sensors an die Umgebung dafür, dass der Sensor im Betrieb ausreichend entwärmt wird, um, insbesondere über einen langen Zeitraum, zuverlässige Messergebnisse zu erhalten.

Vorteilhaft weist der Sensor einen Temperatursensor, insbesondere einen Platin-Temperatursensor, auf. Der Platin-Temperatursensor wird beispielsweise aus einem PT-100-Element hergestellt. Der Sensor kann weitere Sensoren, beispielsweise einen Magnetfeldsensor, aufweisen. Durch die Sensorvorrichtung, die in Bohrungen variabler Tiefe einführbar ist, wird die Durchführung von Messungen, insbesondere Temperaturmessungen, an relevanten Stellen in der elektrischen rotierenden Maschine ermöglicht und so eine hohe Messgenauigkeit erreicht.

Ausführungsbeispiele der Erfindung werden anhand von Zeichnungen näher erläutert. Hierhin zeigen stark vereinfacht:
- FIG 1: einen Längsschnitt einer ersten Ausführungsform einer Sensorvorrichtung,
- FIG 2: einen vergrößerten Längsschnitt der ersten Ausführungsform der Sensorvorrichtung im Bereich einer inneren Dichtung,
- FIG 3: einen vergrößerten Längsschnitt der ersten Ausführungsform der Sensorvorrichtung im Bereich einer äußeren Dichtung,
- FIG 4: einen vergrößerten Längsschnitt einer zweiten Ausführungsform einer Sensorvorrichtung im Bereich einer äußeren Dichtung und
- FIG 5: einen Längsschnitt einer zweiten Ausführungsform einer Sensorvorrichtung.

Gleiche Bezugszeichen haben in den verschiedenen Figuren die gleiche Bedeutung.

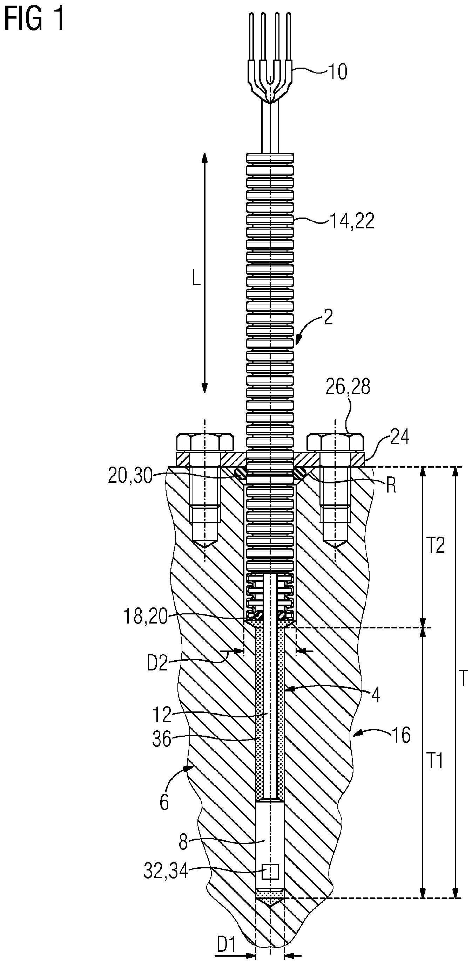

FIG 1 zeigt einen Längsschnitt einer ersten Ausführungsform einer Sensorvorrichtung 2, die in einer Bohrung 4 in einer elektrischen rotierenden Maschine 6, beispielsweise in einem Blechpaket, installiert ist. Die Bohrung 4 weist in einem ersten Tiefenbereich T1 einen ersten Durchmesser D1 und in einem zweiten Tiefenbereich T2 einen zweiten Durchmesser D2 auf, wobei der erste Durchmesser D1 des tiefer in der Bohrung 4 liegenden ersten Tiefenbereichs T1 kleiner ist als der zweite Durchmesser D2. Der zweite Tiefenbereich T2 erstreckt sich bis einem Rand R der Bohrung 4. Das Rand R der Bohrung 4 ist konisch ausgeführt.

Die Sensorvorrichtung 2 weist einen Sensor 8 auf, der mit exemplarisch vier Anschlussleitungen 10 verbunden ist. Die Anschlussleitungen 10 sind flexibel, beispielsweise als Litzen, ausgeführt, einzeln isoliert und mit einem gemeinsamen Schutzschlauch 12 umgeben. Der Schutzschlauch ist aus einem Kunststoff, insbesondere einem thermoplastischen Kunststoff, gefertigt und ist in einem Schutzrohr 14 eingeführt.

Der Raum zwischen dem Schutzschlauch 12 und dem Schutzrohr 14 ist, zumindest an einem Ende an einer Sensorseite 16 des Schutzrohrs 14, über mindestens eine innere Dichtung 18, die als eine O-Ring-Dichtung 20 ausgeführt ist, diffusionsdicht abgedichtet. Der Schutzschlauch 12 ist in eine Längsrichtung L beweglich im Schutzrohr 14 angeordnet, wodurch eine Variation der Tiefe T des Sensors 8 in der Bohrung 4, insbesondere innerhalb des ersten Tiefenbereichs T1, gewährleistet wird. Der Sensor 8 ist somit durch die Beweglichkeit des Schutzschlauchs 12 im Schutzrohr 14 für verschiedene Tiefen T der Bohrung 4 flexibel positionierbar. Das Schutzrohr 14 befindet sich außerhalb der Bohrung 4 sowie im zweiten Tiefenbereich T2 der Bohrung 4. Da der erste Durchmesser D1 der Bohrung 4 kleiner als der Außendurchmesser des Schutzrohrs 14 ist, wird ein tieferes Eindringen des Schutzrohrs 14 durch einen Formschluss verhindert. Auch das Schutzrohr ist für verschieden große zweite Tiefenbereiche T2 der Bohrung 4 flexibel positionierbar. Auch Sensorvorrichtungen 2 für Bohrungen 4 ohne einen zweiten Tiefenbereich T2 sind Gegenstand der Erfindung, wobei sich in diesem Fall das Schutzrohr 14 im Wesentlichen außerhalb der Bohrung 4 befindet.

Sowohl der Schutzschlauch 12 als auch das Schutzrohr 14 sind in ihrer Ausführung zumindest teilweise flexibel ausgeführt, sodass eine variable Kabelführung außerhalb der Bohrung ermöglicht wird. Ein Querschnitt des Schutzrohrs 14 ist rund, kann aber auch eckig, beispielsweise sechseckig, ausgestaltet sein. Ferner ist das Schutzrohr 14 als Wellrohr 22, insbesondere in Form eines Faltenbalgs, ausgeführt. Das Wellrohr 22 besteht zumindest teilweise aus einem Kunststoff, insbesondere aus einem thermoplastischen Kunststoff, oder aus einem Metall, beispielsweise Aluminium.

Über eine Befestigungsvorrichtung 24 ist das Schutzrohr 14 mit der elektrischen rotierenden Maschine 6 mechanisch fixiert. Die Befestigungsvorrichtung 24 ist über Verbindungselemente 26, insbesondere Schrauben 28, mit der elektrischen rotierenden Maschine 6 verbunden. Eine äußere Dichtung 30, welche als O-Ring-Dichtung 20 ausgeführt ist, verläuft um das Schutzrohr 14 herum und wird zwischen der Befestigungsvorrichtung 24 und dem konischen Rand R der Bohrung 4 eingeklemmt, sodass die Bohrung 4 durch die O-Ring-Dichtung 20 diffusionsdicht abgedichtet ist und das Schutzrohr 14 durch die Klemmverbindung fixiert ist.

Darüber hinaus wird die Sensorvorrichtung 2 durch die Befestigungsvorrichtung 24, die mit der äußeren Dichtung 30 mechanisch zusammenwirkt, gegenüber äußeren Kräften, die beispielswiese auf das Schutzrohr 14 einwirken, stabilisiert ohne dass eine, insbesondere zuvor eingestellte, Position des Schutzrohrs 14 und damit des Sensors 8 merklich verändert wird.

Der Sensor 8 weist zumindest einen Temperatursensor 32, insbesondere einen Platin-Temperatursensor 34, beispielsweise mit einem PT-100-Messelement, auf. In der Bohrung 4 befindet sich, zumindest im Bereich des Sensors 8, Wärmeleitpaste 36 zur thermischen Kontaktierung des Sensors 8 mit der elektrischen rotierenden Maschine 6.

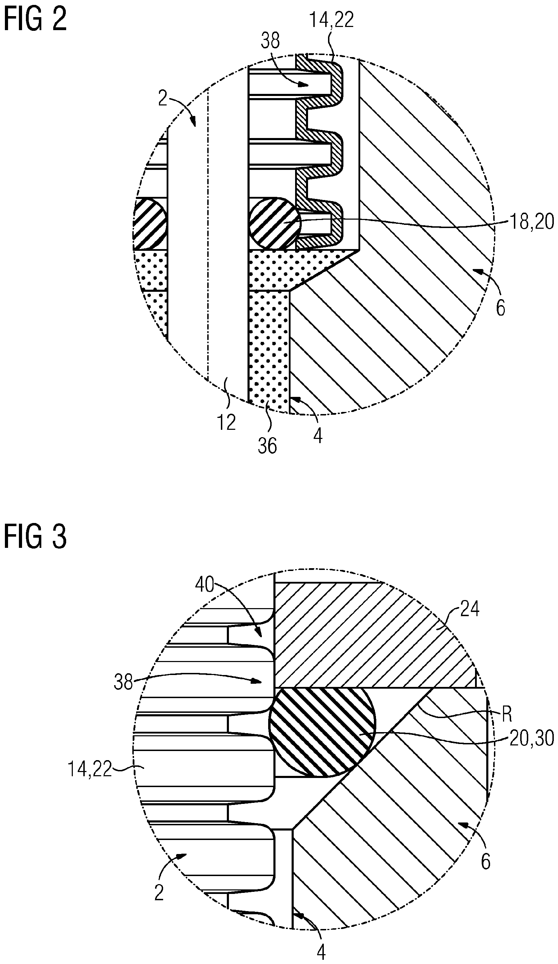

FIG 2 zeigt einen vergrößerten Ausschnitt der ersten Ausführungsform der Sensorvorrichtung 2 im Bereich einer inneren Dichtung 18, die als O-Ring-Dichtung 20 ausgeführt ist. Die O-Ring-Dichtung 20 ist aus einem begrenzt elastischen Material, beispielsweise aus einem Kautschuk, insbesondere Perfluorkautschuk, aus Polyethylen, aus Polytetrafluorethylen oder einem anderen Kunststoff, hergestellt. Darüber hinaus verläuft die O-Ring-Dichtung 20 um den Schutzschlauch 12 herum und ist in einer Rippe 38 des als Wellrohr 22 ausgeführten Schutzrohrs 14 verklemmt. Auf diese Weise wird der Bereich zwischen dem Schutzschlauch 12 und dem Schutzrohr 14 durch die O-Ring-Dichtung 20 diffusionsdicht abgedichtet. Die weitere Ausführung der Sensorvorrichtung 2 entspricht der in FIG 1.

FIG 3 zeigt einen vergrößerten Längsschnitt der ersten Ausführungsform der Sensorvorrichtung 2 im Bereich einer äußeren Dichtung 30, die, wie die innere Dichtung 18 in FIG 2 als O-Ring-Dichtung 20 aus einem begrenzt elastischen Material, insbesondere aus Kunststoff, ausgeführt ist. Die O-Ring-Dichtung 20 ist an der äußeren Mantelfläche des als Wellrohr 22 ausgeführten Schutzrohrs 14 zwischen zwei benachbarten Rippen 38 angeordnet. Ferner ist die O-Ring-Dichtung 20 zwischen dem konisch ausgeführten Rand R der Bohrung 4 und der Befestigungsvorrichtung 24 eingeklemmt, sodass das Schutzrohr 14 durch die Klemmverbindung fixiert und die Bohrung gleichzeitig durch die O-Ring-Dichtung 20 diffusionsdicht abgedichtet ist. Das Schutzrohr 14 verläuft durch eine Aussparung 40 der Befestigungsvorrichtung 24, wobei das Schutzrohr 14 in der Aussparung 40 an der Befestigungsvorrichtung 24 anliegt. Die weitere Ausführung der Sensorvorrichtung 2 entspricht der in FIG 1.

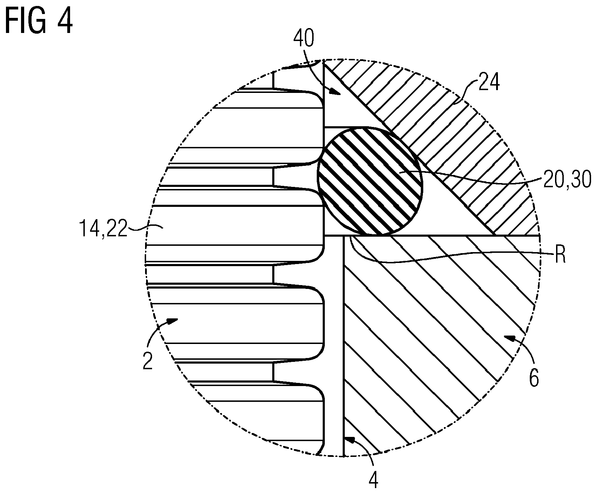

FIG 4 zeigt einen vergrößerten Längsschnitt einer zweiten Ausführungsform einer Sensorvorrichtung 2 im Bereich einer äußeren Dichtung 30, die, wie die äußere Dichtung 30 in FIG 3 als O-Ring-Dichtung 20 aus einem begrenzt elastischen Material, insbesondere aus Kunststoff, ausgeführt und an der äußeren Mantelfläche des Wellrohrs 22 zwischen zwei benachbarten Rippen 38 angeordnet ist. Die Aussparung 40 der Befestigungsvorrichtung 24 verjüngt sich in Längsrichtung L weg von der gerade ausgestalteten Bohrung 4. Die O-Ring-Dichtung 20 wird zwischen der sich verjüngenden Befestigungsvorrichtung 24 und der Bohrung 4 verklemmt, sodass das Schutzrohr 14 durch die Klemmverbindung fixiert und die Bohrung gleichzeitig durch die O-Ring-Dichtung 20 diffusionsdicht abgedichtet wird. Die weitere Ausführung der Sensorvorrichtung 2 entspricht der in FIG 1.

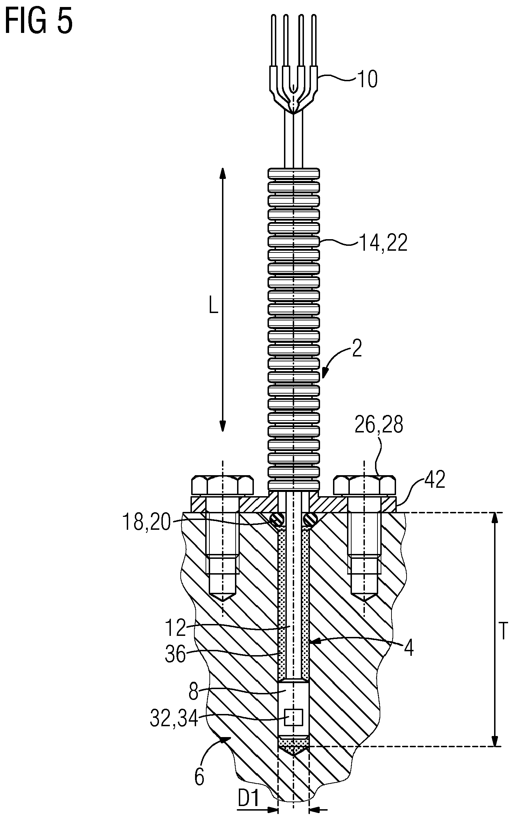

FIG 5 zeigt einen Längsschnitt einer zweiten Ausführungsform einer Sensorvorrichtung 2, wobei das Schutzrohr 14 einen Anschlussflansch 42 aufweist, über den das Schutzrohr 14 mit der elektrischen rotierenden Maschine 6 mechanisch verbunden ist. Dabei ist das Schutzrohr 14 mit dem Anschlussflansch 42 einteilig ausgeführt oder der Anschlussflansch 42 ist mit dem Schutzrohr 14 über eine, insbesondere nicht lösbare, Verbindung, beispielsweise eine stoffschlüssige Verbindung, verbunden. Die Bohrung 4 weist einen konstanten Durchmesser D1 über im Wesentlichen die gesamte Tiefe T auf. Eine innere Dichtung verläuft um den Schutzschlauch 12 herum und wird zwischen der Befestigungsvorrichtung 24 und dem konischen Rand R der Bohrung 4 eingeklemmt, sodass die Bohrung 4 diffusionsdicht abgedichtet wird. Dennoch ist der Sensor 8 für verschiedene Tiefen T der Bohrung 4 flexibel positionierbar. Die weitere Ausführung der Sensorvorrichtung 2 entspricht der in FIG 1.

Zusammenfassend betrifft die Erfindung eine Sensorvorrichtung 2 zur Installation in einer Bohrung 4 einer elektrischen rotierenden Maschine 6, aufweisend einen Sensor 8, welcher mit mindestens einer Anschlussleitung 10 verbunden ist. Um die Sensorvorrichtung 2 flexibel zu positionierbar und universell verwendbar auszuführen, wird vorgeschlagen, dass die mindestens eine Anschlussleitung 1 zumindest teilweise von einem Schutzschlauch 12 umgeben ist, wobei der Schutzschlauch 12 zum Positionieren des Sensors 8 in der Bohrung 4 in eine Längsrichtung L beweglich in einem Schutzrohr 14 angebracht ist.

## Patentansprüche

1. Sensorvorrichtung (2) zur Installation in einer Bohrung (4) einer elektrischen rotierenden Maschine (6),
aufweisend einen Sensor (8), welcher mit mindestens einer Anschlussleitung (10) verbunden ist,
wobei die mindestens eine Anschlussleitung (1) zumindest teilweise von einem Schutzschlauch (12) umgeben ist,
wobei der Schutzschlauch (12) zum Positionieren des Sensors (8) in der Bohrung (4) in eine Längsrichtung (L) beweglich in einem Schutzrohr (14) angebracht ist.

2. Sensorvorrichtung (2) nach Anspruch 1,
wobei der Schutzschlauch (12) mit dem Schutzrohr (14) über mindestens eine innere Dichtung (18), insbesondere eine O-Ring-Dichtung (20), diffusionsdicht verbunden ist.

3. Sensorvorrichtung (2) nach einem der Ansprüche 1 oder 2,
wobei die Sensorvorrichtung (2) eine Befestigungsvorrichtung (24) aufweist, über die das Schutzrohr (14) mit der elektrischen rotierenden Maschine (6) mechanisch verbindbar ist.

4. Sensorvorrichtung (2) nach Anspruch 3,
wobei die Sensorvorrichtung (2) mindestens eine äußere Dichtung (30), insbesondere eine O-Ring-Dichtung (20), aufweist, die dafür vorgesehen ist, die Bohrung (4) abzudichten.

5. Sensorvorrichtung (2) nach Anspruch 4,
wobei die äußere Dichtung (30) mit dem Schutzrohr (14) und der Befestigungsvorrichtung (24) zur Abdichtung der Bohrung (4) verbunden ist.

6. Sensorvorrichtung (2) nach einem der Ansprüche 3 bis 5,
wobei die Befestigungsvorrichtung (24) als Anschlussflansch (42) ausgeführt ist, der mit dem Schutzrohr (14) verbunden ist und über den das Schutzrohr (14) mit der elektrischen rotierenden Maschine (6) mechanisch verbindbar ist.

7. Sensorvorrichtung (2) nach einem der vorherigen Ansprüche,
wobei die Sensorvorrichtung (2) im Bereich des Schutzrohres (14) zumindest teilweise flexibel ausgeführt ist.

8. Sensorvorrichtung (2) nach einem der vorherigen Ansprüche,
wobei das Schutzrohr (14) als Wellrohr (22) ausgeführt ist.

9. Sensorvorrichtung (2) nach einem der vorherigen Ansprüche,
wobei der Sensor (8) zumindest teilweise von Wärmeleitpaste (36) umgeben ist.

10. Sensorvorrichtung (2) nach einem der vorherigen Ansprüche,
wobei der Sensor (8) einen Temperatursensor (32), insbesondere einen Platin-Temperatursensor (34), aufweist.

11. Elektrische rotierende Maschine (6) mit mindestens einer Bohrung (4) und mindestens einer Sensorvorrichtung (2) nach einem der Ansprüche 1 bis 10,
wobei der mindestens eine Sensor (8) mit einem zugehörigen Schutzschlauch (12) in die mindestens eine Bohrung (4) eingeführt ist.

12. Elektrische rotierende Maschine (6) nach Anspruch 11,
wobei das Schutzrohr (14) über eine Befestigungsvorrichtung (24) mit der elektrischen rotierenden Maschine (6) mechanisch verbunden ist.

13. Elektrische rotierende Maschine (6) nach Anspruch 12,
wobei mindestens eine Bohrung (4) über eine äußere Dichtung (30), insbesondere eine O-Ring-Dichtung (20) abgedichtet ist.

14. Elektrische rotierende Maschine (6) nach Anspruch 11,
wobei die Befestigungsvorrichtung (24) als Anschlussflansch (42) ausgeführt ist, der mit dem Schutzrohr (14) verbunden ist und über den das Schutzrohr (14) mit der elektrischen rotierenden Maschine (6) mechanisch verbunden ist.
